# FASCICULE DE BREVET EUROPEEN

(11) **EP 3 002 104 B1**
(45) Date de publication et mention de la délivrance du brevet: **13.03.2019**
(21) Numéro de dépôt: 15188135.6
(22) Date de dépôt: 02.10.2015
(51) Int. Cl.: B29C 65/36, H01Q 1/32, B29C 65/34, B29K 101/12, B29L 31/30

(54) **PROCÉDÉ DE FABRICATION D'UNE STRUCTURE DE VÉHICULE, ET STRUCTURE DE VÉHICULE**
HERSTELLUNGSVERFAHREN EINER FAHRZEUGSSTRUKTUR, UND FAHRZEUGSTRUKTUR
METHOD FOR MANUFACTURING A VEHICLE STRUCTURE, AND VEHICLE STRUCTURE

(30) Priorité: 02.10.2014 FR 1459428
(43) Date de publication de la demande: 06.04.2016
(73) Titulaire: Flex-N-Gate France, 25405 Audincourt (FR)
(72) Inventeur: GUYON, Cyrille, 25600 NOMMAY (FR)
(74) Mandataire: Lavoix

(56) Documents cités:
- WO-A1-99/21694
- WO-A1-2009/070890
- WO-A1-2012/109541
- WO-A2-2009/047010
- DE-A1- 4 126 188
- DE-A1-102013 219 822
- DE-C1- 4 101 663
- JP-A- H07 332 542
- JP-B2- 3 971 818
- US-A- 6 004 418
- US-A1- 2008 152 919
- US-A1- 2009 107 620

## Description

L'invention concerne en général l'assemblage de pièces en matériaux thermoplastiques.

Plus précisément, l'invention concerne selon un premier aspect un procédé de fabrication d'une structure de véhicule, le procédé comprenant les étapes suivantes :
- approvisionnement d'une première pièce en un matériau thermoplastique, ayant une première surface ;
- approvisionnement d'une seconde pièce en un matériau thermoplastique, ayant une seconde surface ;
- fixation des première et seconde surfaces l'une à l'autre.

Il est possible d'assembler deux pièces en matériau thermoplastique par collage, par assemblage mécanique en utilisant des vis ou des rivets, ou encore par soudage.

La structure obtenue est relativement coûteuse. En effet, les matériaux thermoplastiques sont utilisés de plus en plus fréquemment dans l'industrie automobile en remplacement du métal, notamment pour alléger les structures. Ils présentent le défaut d'être souvent plus chers que les matériaux métalliques.

Dans ce contexte, l'invention vise à proposer un procédé de fabrication permettant in fine de réduire le coût de la structure.

A cette fin, l'invention porte sur un procédé de fabrication du type précité, caractérisé en ce que :
- l'étape de fixation comprend disposer un élément électriquement conducteur au niveau de l'une des première et seconde surfaces, plaquer les première et seconde surfaces l'une contre l'autre, générer de la chaleur en créant un courant électrique dans l'élément électriquement conducteur ;
le procédé comprenant en outre les étapes suivantes :
- approvisionnement d'un organe électrique ayant un circuit de mise à la masse ;
- approvisionnement d'un composant en un métal électriquement conducteur ;
- raccordement électrique de l'élément électriquement conducteur d'une part au circuit de mise à la masse et d'autre part au composant en métal électriquement conducteur.

Ainsi, le mode de fixation choisi permet d'intégrer une fonction supplémentaire dans la structure, à savoir la mise à la masse d'un organe électrique, en utilisant l'élément électriquement conducteur servant à la fixation.

L'intégration de cette fonction supplémentaire permet in fine de valoriser la structure.

Le procédé peut également présenter la caractéristique suivante :
- le composant en métal électriquement conducteur est un châssis du véhicule.

Selon un second aspect, l'invention porte sur un procédé de fabrication d'une structure de véhicule, comprenant les étapes suivantes :
- approvisionnement d'une première pièce en un matériau thermoplastique, ayant une première surface ;
- approvisionnement d'une seconde pièce en un matériau thermoplastique, ayant une seconde surface ;
- fixation des première et seconde surfaces l'une à l'autre ;
- l'étape de fixation comprenant disposer un élément électriquement conducteur au niveau de l'une des première et seconde surfaces, plaquer les première et seconde surfaces l'une contre l'autre, générer de la chaleur en créant un courant électrique dans l'élément électriquement conducteur, l'élément électriquement conducteur étant agencé pour constituer une antenne de réception et/ou d'émission d'un signal électromagnétique codant une information analogique ou numérique ;
le procédé comprenant en outre les étapes suivantes :
- se procurer un module adapté pour traiter un signal électrique fourni par l'antenne et codant ladite information analogique ou numérique, et/ou pour fournir à l'antenne un signal électrique codant ladite information analogique ou numérique;
- raccorder électriquement le module d'alimentation électrique et de pilotage à l'élément électriquement conducteur.

Le second mode de réalisation de l'invention permet donc d'intégrer une autre fonction dans la structure du véhicule, à savoir une antenne de réception et/ou d'émission d'un signal électromagnétique codant une information analogique ou numérique, en utilisant l'élément électriquement conducteur.

Le procédé peut également présenter la caractéristique suivante :
- l'antenne est adaptée pour recevoir et/ou émettre l'un au moins d'un signal radio, WiFi, téléphonique, GPS, télévision.

Selon un troisième aspect, l'invention porte sur un procédé de fabrication d'une structure de véhicule, comprenant les étapes suivantes :
- approvisionnement d'une première pièce en un matériau thermoplastique, ayant une première surface ;
- approvisionnement d'une seconde pièce en un matériau thermoplastique, ayant une seconde surface ;
- fixation des première et seconde surfaces l'une à l'autre ;
- l'étape de fixation comprenant disposer un élément électriquement conducteur au niveau de l'une des première et seconde surfaces, plaquer les première et seconde surfaces l'une contre l'autre, générer de la chaleur en créant un courant électrique dans l'élément électriquement conducteur, l'élément électriquement conducteur étant agencé pour constituer un blindage électromagnétique.

Ce troisième mode de réalisation permet d'intégrer encore une autre fonction à la structure du véhicule, l'élément électriquement conducteur étant ici utilisé pour constituer un blindage électromagnétique.

Le procédé conforme au troisième mode de réalisation présente en outre la caractéristique ci-dessous :
- au moins l'une des première et seconde pièces est un élément d'un pavillon du véhicule, l'élément électriquement conducteur étant une partie d'une cage de Faraday entourant un habitacle du véhicule.

Les procédés de fabrication de chacun des trois modes de réalisation de l'invention peuvent en outre présenter une ou plusieurs des caractéristiques ci-dessous, considérées individuellement ou selon toutes les combinaisons techniquement possibles :
- l'élément électriquement conducteur comprend au moins un fil métallique électriquement conducteur et une gaine enveloppant le fil, la gaine étant en un matériau thermoplastique adapté pour créer une liaison avec les matériaux thermoplastiques respectifs des première et seconde pièces ;
- l'élément électriquement conducteur est disposé entre les première et seconde surfaces ;
- l'élément électriquement conducteur est noyé dans l'une des première et seconde pièces ;
- le courant électrique est créé dans l'élément électriquement conducteur par induction.

Selon un quatrième aspect, l'invention porte sur une structure de véhicule comprenant:
- une première pièce en un matériau thermoplastique, ayant une première surface ;
- une seconde pièce en un matériau thermoplastique, ayant une seconde surface ;
- les première et seconde surfaces étant plaquées l'une contre l'autre et fixées l'une à l'autre par fusion de la première et/ou de la seconde surface;
la structure comprenant :
- un élément électriquement conducteur disposé au niveau de l'une des première et seconde surfaces et agencé pour permettre de faire fondre la première et/ou seconde surface quand un courant électrique circule dans l'élément électriquement conducteur ;
- un organe électrique ayant un circuit de mise à la masse ;
- un composant en un métal électriquement conducteur ;
- l'élément électriquement conducteur étant raccordé électriquement d'une part au circuit de mise à la masse et d'autre part au composant en métal électriquement conducteur.

Cette structure est typiquement obtenue par le procédé de fabrication selon le premier aspect de l'invention.

Selon un cinquième aspect, l'invention porte sur une structure de véhicule comprenant:
- une première pièce en un matériau thermoplastique, ayant une première surface ;
- une seconde pièce en un matériau thermoplastique, ayant une seconde surface ;
- les première et seconde surfaces étant plaquées l'une contre l'autre et fixées l'une à l'autre par fusion de la première et/ou de la seconde surface ;
la structure comprenant :
- un élément électriquement conducteur disposé au niveau de l'une des première et seconde surfaces et agencé pour permettre de faire fondre la première et/ou seconde surface quand un courant électrique circule dans l'élément électriquement conducteur, l'élément électriquement conducteur étant aussi agencé pour constituer une antenne de réception et/ou d'émission d'un signal électromagnétique codant une information analogique ou numérique ;
- un module adapté pour traiter un signal électrique fourni par l'antenne et codant ladite information analogique ou numérique, et/ou pour fournir à l'antenne un signal électrique codant ladite information analogique ou numérique ;
- le module étant raccordé électriquement à l'élément électriquement conducteur.

Cette structure est typiquement obtenue par le procédé de fabrication selon le deuxième aspect de l'invention.

Selon un sixième aspect, l'invention porte sur une structure de véhicule comprenant :
- une première pièce en un matériau thermoplastique, ayant une première surface ;
- une seconde pièce en un matériau thermoplastique, ayant une seconde surface ;
- les première et seconde surfaces étant plaquées l'une contre l'autre et fixées l'une à l'autre par fusion de la première et/ou de la seconde surface ;
la structure comprenant :
- un élément électriquement conducteur disposé au niveau de l'une des première et seconde surfaces et agencé pour permettre de faire fondre la première et/ou seconde surface quand un courant électrique circule dans l'élément électriquement conducteur, l'élément électriquement conducteur étant aussi agencé pour constituer un blindage électromagnétique;
au moins l'une des première et seconde pièces étant un élément d'un pavillon du véhicule, l'élément électriquement conducteur étant une partie d'une cage de Faraday entourant un habitacle du véhicule.

Cette structure est typiquement obtenue par le procédé de fabrication selon le troisième aspect de l'invention.

Le document JP H07 332542 A divulgue un procédé de fabrication d'une structure de véhicule, le procédé comprenant les étapes suivantes :
- approvisionnement d'une première pièce en matériau thermoplastique ayant une première surface;
- approvisionnement d'une seconde pièce en matériau thermoplastique ayant une seconde surface;
- fixation des première et seconde surfaces l'une à l'autre;
où l'étape de fixation comprend disposer un élément électriquement conducteur au niveau de l'une des première et seconde surfaces, plaquer les première et seconde surfaces l'une contre l'autre, générer de la chaleur en créant un courant électrique dans l'élément électriquement conducteur.

D'autres caractéristiques et avantages de l'invention ressortiront de la description détaillée qui en est donnée ci-dessous, à titre indicatif et nullement limitatif, en référence aux figures annexées, parmi lesquelles :
- les figures 1 à 3 représentent différentes étapes d'un procédé de fabrication conforme au premier aspect de l'invention ;
- les figures 4 et 5 représentent des étapes d'un procédé conforme au second aspect de l'invention ;
- la figure 6 représente un véhicule automobile comportant une structure obtenue par le procédé selon le troisième aspect de l'invention ;
- la figure 7 représente les première et seconde pièces avant assemblage selon le procédé conforme au troisième aspect de l'invention ; et
- la figure 8 est une vue similaire à celle de la figure 1, pour une variante de réalisation de l'invention.

L'invention porte sur un procédé de fabrication d'une structure de véhicule, notamment d'un véhicule automobile tel qu'une voiture ou un camion.

Le procédé permet de fixer deux pièces en matériau thermoplastique l'une à l'autre, tout en intégrant des fonctions supplémentaires dans la structure.

Le procédé de fabrication comprend les étapes suivantes :
- approvisionnement d'une première pièce 1 en un matériau thermoplastique, ayant une première surface 3 ;
- approvisionnement d'une seconde pièce 5 en un matériau thermoplastique, ayant une seconde surface 7 ;
- fixation des première et seconde surfaces 3, 7 l'une à l'autre.

Les première et seconde pièces peuvent être de tout type. Par exemple, les première et seconde pièces sont des éléments de carrosserie du véhicule. En variante, ce sont des éléments intégrés dans le châssis du véhicule, etc.

Les première et seconde pièces ont toutes sortes de formes. Par exemple, ce sont des profilés, ou des coques minces, etc.

Les première et seconde pièces sont par exemple dans le même matériau thermoplastique (type de résine et type de fibre identiques). En variante, les première et seconde pièces sont dans des matériaux thermoplastiques différents (type de résine et/ou type de fibre différents) l'un de l'autre.

Chacune des première et seconde pièces est avantageusement dans un matériau choisi dans la liste suivante : le polyéthylène, polypropylène, polyamide, POM ....

Si nécessaire, le matériau thermoplastique est chargé avec différents additifs, en vue par exemple d'augmenter la résistance mécanique du matériau.

Ces additifs sont par exemple choisis dans la liste suivante : des fibres minérales (verre, carbone,...), des fibres naturelles (lins, ...) ou des fibres chimiques (kevlar, ...).

Les première et seconde surfaces 3, 7 sont, avant fixation, des surfaces libres. Elles sont de formes complémentaires.

Selon l'invention, l'étape de fixation comprend :
- disposer un élément électriquement conducteur 9 au niveau de l'une au moins des première et seconde surfaces 3, 7 ;
- plaquer les première et seconde surfaces 3, 7 l'une contre l'autre ;
- générer de la chaleur en créant un courant électrique dans l'élément conducteur 9.

L'élément électriquement conducteur comporte avantageusement au moins un fil métallique électriquement conducteur 11, et une gaine 13 enveloppant le fil 11. Le fil 11 est par exemple en cuivre, ou en tout autre métal adapté. La gaine 13 couvre typiquement entièrement le fil 11.

La gaine 13 est un matériau thermoplastique adapté pour créer une liaison avec les matériaux thermoplastiques respectifs des première et seconde pièces 1 et 5. Par exemple, la gaine 13 est dans le même matériau thermoplastique que la première pièce et/ou la seconde pièce. En variante, la gaine 13 est dans un matériau thermoplastique différent.

Par exemple, la gaine 13 est dans l'un des matériaux de la liste suivante : le polyéthylène, polypropylène, polyamide, POM ...

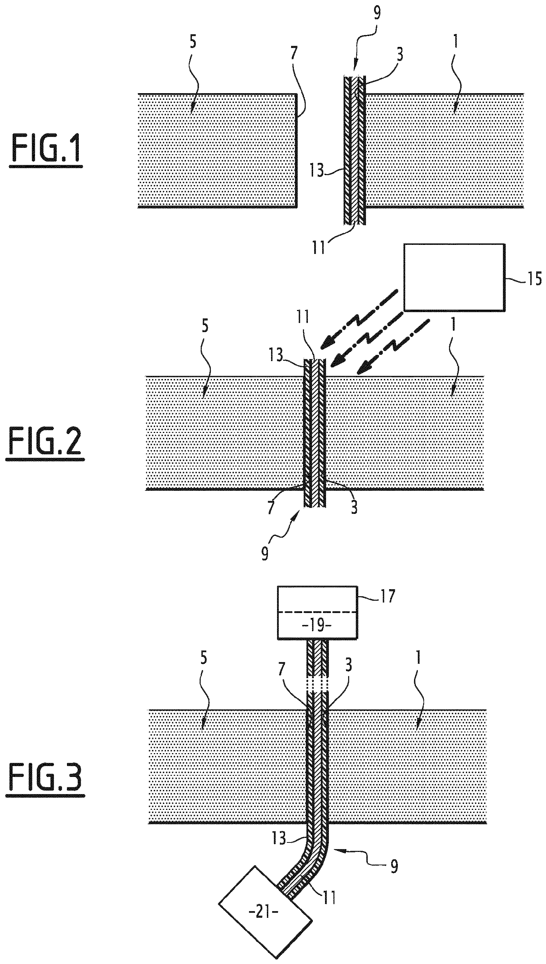

Dans l'exemple de réalisation illustré sur les figures 1 à 3, le terme disposer un élément électriquement conducteur au niveau de l'une des première et seconde surfaces signifie que l'élément électriquement conducteur 9 est plaqué contre l'une des première et seconde surfaces 3, 7. Cette opération est effectuée avant que les deux surfaces soient plaquées l'une contre l'autre. Une fois les première et seconde surfaces plaquées l'une contre l'autre, l'élément électriquement conducteur est disposé entre les première et seconde surfaces, c'est-à-dire est pincé entre les deux surfaces.

En variante, on place un élément électriquement conducteur 9 au niveau de la surface 3, et un autre élément électriquement conducteur au niveau de la surface 7.

L'élément électriquement conducteur présente une forme adaptée en fonction de la forme des première et seconde surfaces 3, 7, de manière à permettre le chauffage de toutes les zones des surfaces 3 et 7 destinées à être assemblées l'une sur l'autre.

Par exemple, l'élément électriquement conducteur 9 est agencé en forme de vague, ou de spirale, ou selon toute autre forme adaptée.

Le courant électrique est créé dans l'élément électriquement conducteur 9 de toute manière adaptée. Dans l'exemple de réalisation représenté sur la figure 2, ce courant électrique est créé par induction.

Pour ce faire, un organe 15 générateur de champ magnétique est disposé à proximité de l'élément électriquement conducteur 9 (figure 2). Un champ magnétique variable est ensuite créé par l'organe 15, ce qui a pour effet de créer un courant électrique à l'intérieur de l'élément électriquement conducteur 9. La circulation du courant électrique, de manière connue, génère de la chaleur par effet Joule dans l'élément électriquement conducteur.

La chaleur ainsi dégagée fait fondre les matériaux thermoplastiques constituant les première et seconde surfaces. Ces matériaux se mélangent, et, après refroidissement, une liaison entre les première et seconde surfaces est ainsi créée.

Par ailleurs, quand l'élément électriquement conducteur est un fil gainé comme dans l'exemple de réalisation des figures 1 à 3, le matériau de la gaine 13 est choisi de manière à fondre lui aussi sous l'effet de la chaleur dégagée. Le matériau de la gaine 13 se mélange avec les matériaux thermoplastiques constituant les première et seconde surfaces, et après refroidissement contribue à la fixation des première et seconde surfaces l'une à l'autre.

Selon une variante de réalisation non représentée, l'élément électriquement conducteur 9 comporte le fil métallique 11 mais ne comporte par la gaine 13. Dans ce cas, la liaison entre les première et seconde surfaces est réalisée exclusivement par fusion, mélange et solidification des matériaux thermoplastiques constituant les première et seconde surfaces.

Selon une autre variante de réalisation, le courant électrique dans l'élément électriquement conducteur 9 est créé en raccordant cet élément électriquement conducteur aux bornes d'un générateur de courant.

Dans un exemple de réalisation, l'élément électriquement conducteur est un élément unique, continu. En variante, l'élément électriquement conducteur comporte plusieurs tronçons, qui ne sont pas raccordés électriquement les uns aux autres.

Selon encore un autre exemple de réalisation, l'élément électriquement conducteur n'est pas un fil mais une bande, ou une plaque perforée, ou tout autre élément adapté.

De manière à utiliser l'élément électriquement conducteur pour intégrer une fonction supplémentaire à la structure du véhicule, le procédé selon le premier aspect de l'invention comprend en outre les étapes suivantes :
- approvisionnement d'un organe électrique 17 ayant un circuit de mise à la masse 19;
- approvisionnement d'un composant en un métal électriquement conducteur 21 ;
- raccordement électrique de l'élément électriquement conducteur 9 d'une part au circuit de mise à la masse 19 et d'autre part au composant en métal électriquement conducteur 21.

Ainsi, l'élément électriquement conducteur 9 est utilisé non seulement pour fixer les première et seconde surfaces 3 et 7 l'une à l'autre mais également pour mettre à la masse l'organe électrique 17.

L'organe électrique 17 est par exemple un capteur, un actionneur, un calculateur, une lampe...

Le composant 21 est typiquement un composant métallique massif du véhicule automobile, tel que le châssis.

L'élément électriquement conducteur 9 est raccordé typiquement par une première extrémité au circuit de mise à la masse 19, et par son extrémité opposée au composant en métal électriquement conducteur 21.

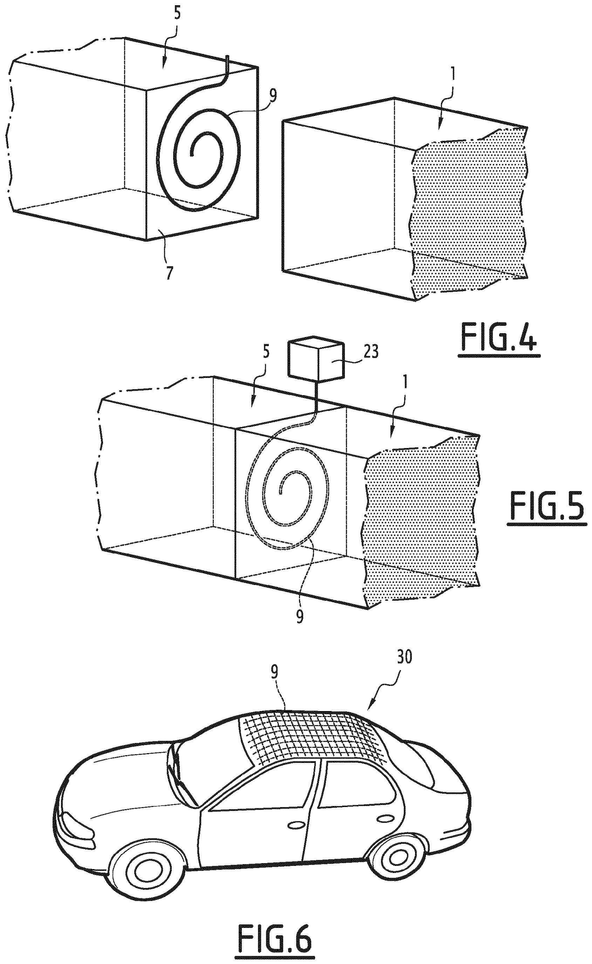

Un second aspect de l'invention va maintenant être décrit, en référence aux figures 4 et 5. Seuls les points par lesquels ce second aspect diffère du premier seront détaillés ci-dessous. Les éléments identiques ou assurant la même fonction seront désignés par les mêmes références.

Selon le second aspect, l'invention porte sur un procédé de fabrication comportant les mêmes étapes d'approvisionnement et de fixation que dans le premier aspect.

Le second aspect de l'invention diffère du premier par l'utilisation de l'élément électriquement conducteur 9, qui est ici adapté pour réaliser une fonction différente de la mise à la masse.

Plus précisément, dans le second aspect de l'invention, l'étape d'approvisionnement d'une première pièce en un matériau thermoplastique, l'étape d'approvisionnement d'une seconde pièce en un matériau thermoplastique et l'étape de fixation des première et seconde surfaces l'une à l'autre sont identiques aux étapes décrites plus haut pour le premier aspect de l'invention.

En revanche, le procédé comporte les étapes suivantes :
- se procurer un module 23 adapté pour traiter un signal électrique fourni par une antenne et codant une information analogique ou numérique, et/ou pour fournir à l'antenne un signal électrique codant une information analogique ou numérique ;
- raccorder électriquement le module 23 à l'élément électriquement conducteur 9.

Par ailleurs, l'élément électriquement conducteur 9 est agencé pour constituer une antenne de réception et/ou d'émission d'un signal électromagnétique codant une information analogique ou numérique.

Par exemple, l'antenne est adaptée pour recevoir et/ou émettre l'un au moins d'un signal radio, WiFi, téléphonique, GPS, ou encore de télévision.

La forme conférée à l'élément électriquement conducteur 9 dépend de la longueur d'ondes ou de la plage de longueur d'ondes du signal électromagnétique à capter ou émettre, et de la forme des première et seconde surfaces. Elle est choisie également pour permettre la fixation des première et seconde surfaces l'une à l'autre, par génération de chaleur dans l'élément électriquement conducteur 9 et fusion des matériaux thermoplastiques.

Par exemple, l'élément électriquement conducteur est agencé en spirale, comme illustré sur la figure 4. Alternativement, il peut prendre la forme d'une plaque, d'une grille, ou toutes formes adaptées déterminées par les besoins de réception de l'antenne.

Le module 23 est de type connu. Il est adapté pour traiter le signal électrique fourni par l'antenne et pour le transmettre à un équipement monté à bord du véhicule tel qu'un téléphone, ou un tuner radio, ou un GPS, ou un équipement communiquant en WiFi ou une télévision. L'antenne 9 convertit le signal électromagnétique en un signal électrique. Le module 23 met le signal électrique sous une forme adaptée pour ledit équipement. Le module 23 est également adapté pour fournir à l'antenne un signal électrique qui sera converti en signal électromagnétique par l'antenne. Ce signal électrique provient typiquement d'un autre équipement du véhicule, par exemple un téléphone, ou un tuner radio, ou un GPS, ou un équipement communiquant en WiFi ou une caméra.

Dans le second aspect de l'invention, les première et seconde pièces sont par exemple des éléments d'un béquet arrière du véhicule, du capot, du pavillon du véhicule, ou toutes autres pièces adaptées.

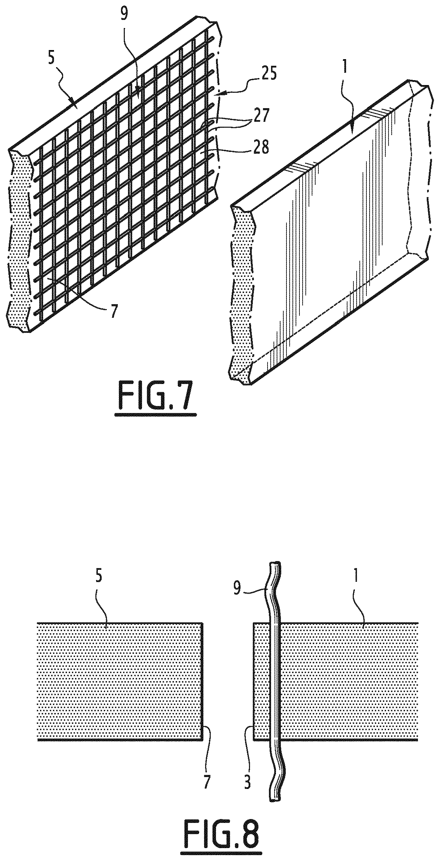

Un troisième aspect de l'invention va maintenant être décrit, en référence aux figures 6 et 7. Seuls les points par lesquels ce troisième aspect se différencie du premier aspect seront détaillés ci-dessous. Les éléments identiques ou assurant les mêmes fonctions seront désignés par les mêmes références.

Le procédé de fabrication selon le troisième aspect de l'invention comporte une étape d'approvisionnement d'une première pièce en matériau thermoplastique, une étape d'approvisionnement d'une seconde pièce en matériau thermoplastique et une étape de fixation des première et seconde surfaces des deux pièces l'une à l'autre qui sont identiques à celles décrites pour le premier aspect de l'invention.

En revanche, le troisième aspect se différencie du premier aspect de l'invention par l'utilisation qui est faite de l'élément électriquement conducteur 9, qui permet de réaliser une fonction différente.

En effet, dans le troisième aspect de l'invention, l'élément électriquement conducteur 9 est agencé pour constituer un blindage électromagnétique, comme illustré par exemple sur la figure 6.

Un blindage électromagnétique, appelé aussi blindage électrique, est de préférence un blindage visant à réduire le champ électromagnétique au voisinage d'un objet, en interposant une barrière entre la source du champ magnétique et l'objet à protéger. La barrière est faite d'un matériau électriquement conducteur.

Selon le troisième aspect, l'élément électriquement conducteur 9 est une grille métallique, visible notamment sur les figures 6 et 7. Cette grille comporte une pluralité de fils conducteurs, raccordés les uns aux autres de manière à définir entre eux des orifices. Les orifices sont par exemple rectangulaires, ou de toute forme et de toute taille adaptée.

En variante, l'élément électriquement conducteur 9 se présente sous la forme d'une feuille métallique perforée.

Le troisième aspect de l'invention est particulièrement adapté à la fabrication d'un élément de carrosserie du véhicule, par exemple le pavillon 30 du véhicule comme illustré sur la figure 6.

Par exemple, les première et seconde pièces 1 et 5, dans ce cas, sont deux éléments du pavillon du véhicule. Ce sont par exemple deux plaques minces de matériau thermoplastique, superposées l'une sur l'autre, et soudées l'une sur l'autre avec interposition entre elles de l'élément électriquement conducteur 9. Celui-ci se présente sous la forme d'une grille métallique.

L'élément électriquement conducteur 9 est dans ce cas une partie d'une cage de Faraday qui entoure l'habitacle du véhicule.

En variante, la première pièce est un élément du pavillon du véhicule, la deuxième pièce étant un autre élément du véhicule, par exemple un autre élément de carrosserie distinct du pavillon.

Selon un autre exemple de réalisation, les première et seconde pièces sont agencées de telle sorte que le blindage électronique protège un équipement électronique du véhicule, par exemple un calculateur.

Selon une variante de réalisation représentée sur la figure 8, et applicable à tous les aspects de l'invention, l'élément électriquement conducteur 9 est noyé dans l'une des première et seconde pièces 1, 5.

On entend par là que l'élément électriquement conducteur passe au sein de la première pièce 1 ou de la seconde pièce 5, et est entièrement entouré par le matériau constituant ladite pièce.

Dans ce cas, l'élément électriquement conducteur 9 est situé à faible profondeur sous la première surface 3 ou la seconde surface 7. On entend par là qu'il est situé seulement à quelques millimètres sous ladite surface, par exemple à moins de cinq millimètres sous ladite surface.

Dans cet exemple de réalisation, l'élément électriquement conducteur ne comporte pas de gaine, au moins le long des parties noyées dans la première pièce ou la deuxième pièce.

## Revendications

1. Procédé de fabrication d'une structure de véhicule, le procédé comprenant les étapes suivantes :
- approvisionnement d'une première pièce (1) en un matériau thermoplastique, ayant une première surface (3) ;
- approvisionnement d'une seconde pièce (5) en un matériau thermoplastique, ayant une seconde surface (7) ;
- fixation des première et seconde surfaces (3, 7) l'une à l'autre ;
**caractérisé en ce que** :
- les première et seconde pièces (1, 5) sont des éléments de carrosserie du véhicule ou des éléments intégrés dans le châssis du véhicule ;
- l'étape de fixation comprend disposer un élément électriquement conducteur (9) au niveau de l'une des première et seconde surfaces (3,7), plaquer les première et seconde surfaces (3, 7) l'une contre l'autre, générer de la chaleur en créant un courant électrique dans l'élément électriquement conducteur (9) ;
le procédé comprenant en outre les étapes suivantes :
- approvisionnement d'un organe électrique (17) ayant un circuit de mise à la masse (19) ;
- approvisionnement d'un composant (21) en un métal électriquement conducteur ;
- raccordement électrique de l'élément électriquement conducteur (9) d'une part au circuit de mise à la masse (19) et d'autre part au composant (21) en métal électriquement conducteur.

2. Procédé de fabrication selon la revendication 1, **caractérisé en ce que** le composant (21) en métal électriquement conducteur est un châssis du véhicule.

3. Procédé de fabrication d'une structure de véhicule, le procédé comprenant les étapes suivantes :
- approvisionnement d'une première pièce (1) en un matériau thermoplastique, ayant une première surface (3) ;
- approvisionnement d'une seconde pièce (5) en un matériau thermoplastique, ayant une seconde surface (7);
- fixation des première et seconde surfaces (3, 7) l'une à l'autre ;
**caractérisé en ce que** :
- l'étape de fixation comprend disposer un élément électriquement conducteur (9) au niveau de l'une des première et seconde surfaces (3, 7), plaquer les première et seconde surfaces (3, 7) l'une contre l'autre, générer de la chaleur en créant un courant électrique dans l'élément électriquement conducteur (9), l'élément électriquement conducteur (9) étant agencé pour constituer une antenne de réception et/ou d'émission d'un signal électromagnétique codant une information analogique ou numérique ;
le procédé comprenant en outre les étapes suivantes :
- se procurer un module (23) adapté pour traiter un signal électrique fourni par l'antenne et codant ladite information analogique ou numérique, et/ou pour fournir à l'antenne un signal électrique codant ladite information analogique ou numérique;
- raccorder électriquement le module (23) d'alimentation électrique et de pilotage à l'élément électriquement conducteur (9).

4. Procédé de fabrication selon la revendication 3, **caractérisé en ce que** l'antenne est adaptée pour recevoir et/ou émettre l'un au moins d'un signal radio, WiFi, téléphonique, GPS, ou de télévision.

5. Procédé de fabrication d'une structure de véhicule, le procédé comprenant les étapes suivantes :
- approvisionnement d'une première pièce (1) en un matériau thermoplastique, ayant une première surface (3) ;
- approvisionnement d'une seconde pièce (5) en un matériau thermoplastique, ayant une seconde surface (7) ;
- fixation des première et seconde surfaces (3, 7) l'une à l'autre ;
**caractérisé en ce que** :
- l'étape de fixation comprend disposer un élément électriquement conducteur (9) au niveau de l'une des première et seconde surfaces (3, 7), plaquer les première et seconde surfaces (3, 7) l'une contre l'autre, générer de la chaleur en créant un courant électrique dans l'élément électriquement conducteur (9), l'élément électriquement conducteur (9) étant agencé pour constituer un blindage électromagnétique ; et **en ce que**
- au moins l'une des première et seconde pièces (1, 5) est un élément d'un pavillon (30) du véhicule, l'élément électriquement conducteur (9) étant une partie d'une cage de Faraday entourant un habitacle du véhicule.

6. Procédé de fabrication selon l'une quelconque des revendications précédentes, **caractérisé en ce que** l'élément électriquement conducteur (9) comprend au moins un fil (11) métallique électriquement conducteur et une gaine (13) enveloppant le fil (11), la gaine (13) étant en un matériau thermoplastique adapté pour créer une liaison avec les matériaux thermoplastiques respectifs des première et seconde pièces (1, 5).

7. Procédé de fabrication selon l'une quelconque des revendications précédentes, **caractérisé en ce que** l'élément électriquement conducteur (9) est disposé entre les première et seconde surfaces (3, 7).

8. Procédé de fabrication selon l'une quelconque des revendications 1 à 6, **caractérisé en ce que** l'élément électriquement conducteur (9) est noyé dans l'une des première et seconde pièces (1, 5).

9. Procédé de fabrication selon l'une quelconque des revendications précédentes, **caractérisé en ce que** le courant électrique est créé dans l'élément électriquement conducteur (9) par induction.

10. Structure de véhicule, la structure comprenant:
- une première pièce (1) en un matériau thermoplastique, ayant une première surface (3) ;
- une seconde pièce (5) en un matériau thermoplastique, ayant une seconde surface (7) ;
- les première et seconde surfaces (3, 7) étant plaquées l'une contre l'autre et fixées l'une à l'autre par fusion de la première et/ou de la seconde surface (3, 7);
**caractérisée en ce que** la structure comprend:
- un élément électriquement conducteur (9) disposé au niveau de l'une des première et seconde surfaces (3,7) et agencé pour permettre de faire fondre la première et/ou seconde surface (3, 7) quand un courant électrique circule dans l'élément électriquement conducteur (9);
- un organe électrique (17) ayant un circuit de mise à la masse (19) ;
- un composant (21) en un métal électriquement conducteur ;
- l'élément électriquement conducteur (9) étant raccordé électriquement d'une part au circuit de mise à la masse (19) et d'autre part au composant (21) en métal électriquement conducteur ; et **en ce que**
- les première et seconde pièces (1, 5) sont des éléments de carrosserie du véhicule ou des éléments intégrés dans le châssis du véhicule.

11. Structure de véhicule, la structure comprenant:
- une première pièce (1) en un matériau thermoplastique, ayant une première surface (3) ;
- une seconde pièce (5) en un matériau thermoplastique, ayant une seconde surface (7);
- les première et seconde surfaces (3, 7) étant plaquées l'une contre l'autre et fixées l'une à l'autre par fusion de la première et/ou de la seconde surface (3, 7);
**caractérisée en ce que** la structure comprend:
- un élément électriquement conducteur (9) disposé au niveau de l'une des première et seconde surfaces (3, 7) et agencé pour permettre de faire fondre la première et/ou seconde surface (3, 7) quand un courant électrique circule dans l'élément électriquement conducteur (9), l'élément électriquement conducteur (9) étant aussi agencé pour constituer une antenne de réception et/ou d'émission d'un signal électromagnétique codant une information analogique ou numérique ;
- un module (23) adapté pour traiter un signal électrique fourni par l'antenne et codant ladite information analogique ou numérique, et/ou pour fournir à l'antenne un signal électrique codant ladite information analogique ou numérique ;
- le module (23) étant raccordé électriquement à l'élément électriquement conducteur (9).

12. Structure de véhicule, la structure comprenant:
- une première pièce (1) en un matériau thermoplastique, ayant une première surface (3) ;
- une seconde pièce (5) en un matériau thermoplastique, ayant une seconde surface (7) ;
- les première et seconde surfaces (3, 7) étant plaquées l'une contre l'autre et fixées l'une à l'autre par fusion de la première et/ou de la seconde surface (3, 7);
**caractérisée en ce que** la structure comprend:
- un élément électriquement conducteur (9) agencé au niveau de l'une des première et seconde surfaces (3, 7) et agencé pour permettre de faire fondre la première et/ou seconde surface (3, 7) quand un courant électrique circule dans l'élément électriquement conducteur (9), l'élément électriquement conducteur (9) étant aussi agencé pour constituer un blindage électromagnétique ; et **en ce que**
- au moins l'une des première et seconde pièces (1, 5) est un élément d'un pavillon (30) du véhicule, l'élément électriquement conducteur (9) étant une partie d'une cage de Faraday entourant un habitacle du véhicule.

## Patentansprüche

1. Verfahren für die Herstellung einer Fahrzeugstruktur, wobei das Verfahren die folgenden Schritte umfasst:
- Bereitstellen eines ersten Teils (1) aus einem thermoplastischen Material, das eine erste Oberfläche (3) besitzt;
- Bereitstellen eines zweiten Teils (5) aus einem thermoplastischen Material, das eine zweite Oberfläche (7) besitzt;
- Befestigen der ersten und der zweiten Oberfläche (3, 7) aneinander; **dadurch gekennzeichnet, dass**:
- das erste und das zweite Teil (1, 5) Karosserieelemente des Fahrzeugs oder in den Rahmen des Fahrzeugs integrierte Elemente sind;
- der Schritt des Befestigens das Anordnen eines elektrisch leitenden Elements (9) auf Höhe der ersten oder der zweiten Oberfläche (3, 7), das Drücken der ersten und der zweiten Oberfläche (3, 7) gegeneinander und das Erzeugen von Wärme durch Erzeugen eines elektrischen Stroms in dem elektrisch leitenden Element (9) umfasst;
wobei das Verfahren außerdem die folgenden Schritte umfasst:
- Bereitstellen eines elektrischen Organs (17), das eine Masseschlussschaltung (19) besitzt;
- Bereitstellen einer Komponente (21) aus einem elektrisch leitenden Metall;
- elektrisches Verbinden des elektrisch leitenden Elements (9) einerseits mit der Masseschlussschaltung (19) und andererseits mit der Komponente (21) aus einem elektrisch leitenden Metall.

2. Herstellungsverfahren nach Anspruch 1, **dadurch gekennzeichnet, dass** die Komponente (21) aus elektrisch leitendem Material ein Rahmen des Fahrzeugs ist.

3. Verfahren für die Herstellung einer Fahrzeugstruktur, wobei das Verfahren die folgenden Schritte umfasst:
- Bereitstellen eines ersten Teils (1) aus einem thermoplastischen Material, das eine erste Oberfläche (3) besitzt;
- Bereitstellen eines zweiten Teils (5) aus einem thermoplastischen Material, das eine zweite Oberfläche (7) besitzt;
- Befestigen der ersten und der zweiten Oberfläche (3, 7) aneinander; **dadurch gekennzeichnet, dass**:
- der Schritt des Befestigens das Anordnen eines elektrisch leitenden Element (9) auf Höhe der ersten oder der zweiten Oberfläche (3, 7), das Drücken der ersten und der zweiten Oberfläche (3, 7) gegeneinander und das Erzeugen von Wärme durch Erzeugen eines elektrischen Stroms in dem elektrisch leitenden Element (9) umfasst, wobei das elektrisch leitende Element (9) dafür ausgelegt ist, eine Empfangs- und/oder Sendeantenne für ein elektromagnetisches Signal, das analoge oder digitale Informationen codiert, zu bilden;
wobei das Verfahren außerdem die folgenden Schritte umfasst:
- Bereitstellen eines Moduls (23), das dafür ausgelegt ist, ein von der Antenne geliefertes elektrisches Signal, das die analogen oder digitalen Informationen codiert, zu verarbeiten und/oder an die Antenne ein elektrisches Signal, das die analogen oder digitalen Informationen codiert, zu liefern;
- elektrisches Verbinden des Moduls (23) für die elektrische Versorgung und die Steuerung mit dem elektrisch leitenden Element (9).

4. Herstellungsverfahren nach Anspruch 3, **dadurch gekennzeichnet, dass** die Antenne dafür ausgelegt ist, ein Funksignal und/oder ein WiFi-Signal und/oder ein Telefonsignal und/oder ein GPS-Signal und/oder ein Fernsehsignal zu empfangen und/oder zu senden.

5. Verfahren für die Herstellung einer Fahrzeugstruktur, wobei das Verfahren die folgenden Schritte umfasst:
- Bereitstellen eines ersten Teils (1) aus einem thermoplastischen Material, das eine erste Oberfläche (3) besitzt;
- Bereitstellen eines zweiten Teils (5) aus einem thermoplastischen Material, das eine zweite Oberfläche (7) besitzt;
- Befestigen der ersten und der zweiten Oberfläche (3, 7) aneinander;
**dadurch gekennzeichnet, dass**:
- der Schritt des Befestigens das Anordnen eines elektrisch leitenden Elements (9) auf Höhe entweder der ersten oder der zweiten Oberfläche (3, 7), das Drücken der ersten und der zweiten Oberfläche (3, 7) gegeneinander und das Erzeugen von Wärme durch Erzeugen eines elektrischen Stroms in dem elektrisch leitenden Element (9) umfasst, wobei das elektrisch leitende Element (9) dafür ausgelegt ist, eine elektromagnetische Abschirmung zu bilden; und dass
- das erste und/oder das zweite Teil (1, 5) ein Dachelement (30) des Fahrzeugs ist, wobei das elektrisch leitende Element (9) ein Teil eines Faraday-Käfigs ist, der die Fahrgastzelle des Fahrzeugs umgibt.

6. Herstellungsverfahren nach einem der vorhergehenden Ansprüche, **dadurch gekennzeichnet, dass** das elektrisch leitende Element (9) wenigstens einen elektrisch leitenden Metalldraht (11) und eine den Draht (11) umgebende Hülle (13) ist, wobei die Hülle (13) aus einem thermoplastischen Material besteht, das dafür ausgelegt ist, eine Verbindung mit den thermoplastischen Materialien des ersten bzw. des zweiten Teils (1, 5) zu schaffen.

7. Herstellungsverfahren nach einem der vorhergehenden Ansprüche, **dadurch gekennzeichnet, dass** das elektrisch leitende Element (9) zwischen der ersten und der zweiten Oberfläche (3, 7) angeordnet ist.

8. Herstellungsverfahren nach einem der Ansprüche 1 bis 6, **dadurch gekennzeichnet, dass** das elektrisch leitende Element (9) in das erste oder das zweite Teil (1, 5) eingebettet ist.

9. Herstellungsverfahren nach einem der vorhergehenden Ansprüche, **dadurch gekennzeichnet, dass** der elektrische Strom in dem elektrisch leitenden Element (9) durch Induktion erzeugt wird.

10. Fahrzeugstruktur, wobei die Struktur Folgendes umfasst:
- ein erstes Teil (1) aus einem thermoplastischen Material, das eine erste Oberfläche (3) besitzt;
- ein zweites Teil (5) aus einem thermoplastischen Material, das eine zweite Oberfläche (7) besitzt;
- wobei die erste und die zweite Oberfläche (3, 7) gegeneinander gedrückt sind und durch Schmelzen der ersten und/oder der zweiten Oberfläche (3, 7) aneinander befestigt sind;
**dadurch gekennzeichnet, dass** die Struktur Folgendes umfasst:
- ein elektrisch leitendes Element (9), das auf Höhe der ersten oder der zweiten Oberfläche (3, 7) angeordnet ist und dafür ausgelegt ist, die erste und/oder die zweite Oberfläche (3, 7) schmelzen zu können, wenn in dem elektrisch leitenden Element (9) ein elektrischer Strom fließt;
- ein elektrisches Organ (17), das eine Masseschlussschaltung (19) besitzt;
- eine Komponente (21) aus einem elektrisch leitenden Metall;
- wobei das elektrisch leitende Element (9) einerseits mit der Masseschlussschaltung (19) und andererseits mit der Komponente (21) aus einem elektrisch leitenden Metall elektrisch verbunden ist; und dass
- das erste und das zweite Teil (1, 5) Karosserieelemente des Fahrzeugs oder in den Rahmen des Fahrzeugs integrierte Elemente sind.

11. Fahrzeugstruktur, wobei die Struktur Folgendes umfasst:
- ein erstes Teil (1) aus einem thermoplastischen Material, das eine erste Oberfläche (3) besitzt;
- ein zweites Teil (5) aus einem thermoplastischen Material, das eine zweite Oberfläche (7) besitzt;
- wobei die erste und die zweite Oberfläche (3, 7) gegeneinander gedrückt sind und durch Schmelzen der ersten und/oder der zweiten Oberfläche (3, 7) aneinander befestigt sind;
**dadurch gekennzeichnet, dass** die Struktur Folgendes umfasst:
- ein elektrisch leitendes Element (9), das auf Höhe der ersten oder der zweiten Oberfläche (3, 7) angeordnet ist und dafür ausgelegt ist, die erste und/oder die zweite Oberfläche (3, 7) schmelzen zu können, wenn in dem elektrisch leitenden Element (9) ein elektrischer Strom fließt, wobei das elektrisch leitende Element (9) außerdem dafür ausgelegt ist, eine Empfangs- und/oder Sendeantenne für ein elektromagnetisches Signal, das analoge oder digitale Informationen codiert, zu bilden;
- ein Modul (23), das dafür ausgelegt ist, ein von der Antenne geliefertes elektrisches Signal, das die analogen oder digitalen Informationen codiert, zu verarbeiten und/oder an die Antenne ein elektrisches Signal, das die analogen oder digitalen Informationen codiert, zu liefern;
- wobei das Modul (23) mit dem elektrisch leitenden Element (9) elektrisch verbunden ist.

12. Fahrzeugstruktur, wobei die Struktur Folgendes umfasst:
- ein erstes Teil (1) aus einem thermoplastischen Material, das eine erste Oberfläche (3) besitzt;
- ein zweites Teil (5) aus einem thermoplastischen Material, das eine zweite Oberfläche (7) besitzt;
- wobei die erste und die zweite Oberfläche (3, 7) gegeneinander gedrückt sind und durch Schmelzen der ersten und/oder der zweiten Oberfläche (3, 7) aneinander befestigt sind;
**dadurch gekennzeichnet, dass** die Struktur Folgendes umfasst:
- ein elektrisch leitendes Element (9), das auf Höhe der ersten oder der zweiten Oberfläche (3, 7) angeordnet ist und dafür ausgelegt ist, die erste und/oder die zweite Oberfläche (3, 7) schmelzen zu können, wenn in dem elektrisch leitenden Element (9) ein elektrischer Strom fließt, wobei das elektrisch leitende Element (9) außerdem dafür ausgelegt ist, eine elektromagnetische Abschirmung zu bilden; und dass
- das erste und/oder das zweite Teil (1, 5) ein Dachelement (30) des Fahrzeugs sind, wobei das elektrisch leitende Element (9) ein Teil eines Faraday-Käfigs, der eine Fahrgastzelle des Fahrzeugs umgibt, ist.

## Claims

1. Method for producing a vehicle structure, the method comprising the following steps:
- providing a first part (1) made of a thermoplastic material, having a first surface (3);
- providing a second part (5) made of a thermoplastic material, having a second surface (7);
- attaching the first and second surfaces (3, 7) to one another;
**characterised in that**:
- the first and second parts (1, 5) are elements of the vehicle body or elements integrated in the vehicle chassis;
- the attachment step comprises arranging an electrically conductive element (9) in the region of one of the first and second surfaces (3, 7), clamping the first and second surfaces (3, 7) against one another, generating heat by creating an electric current in the electrically conductive element (9);
the method further comprising the following steps:
- providing an electric member (17) having a grounding circuit (19);
- providing a component (21) made of an electrically conductive metal;
- electrically connecting the electrically conductive element (9) both to the grounding circuit (19) and to the component (21) made of an electrically conductive metal.

2. Production method according to claim 1, **characterised in that** the component (21) made of an electrically conductive metal is a chassis of the vehicle.

3. Method for producing a vehicle structure, the method comprising the following steps:
- providing a first part (1) made of a thermoplastic material, having a first surface (3);
- providing a second part (5) made of a thermoplastic material, having a second surface (7);
- attaching the first and second surfaces (3, 7) to one another;
**characterised in that**:
- the attachment step comprises arranging an electrically conductive element (9) in the region of one of the first and second surfaces (3, 7), clamping the first and second surfaces (3, 7) against one another, generating heat by creating an electric current in the electrically conductive element (9), the electrically conductive element (9) being arranged so as to constitute an antenna for receiving and/or transmitting an electromagnetic signal encoding a piece of analogue or digital information;
the method further comprising the following steps:
- obtaining a module (23) suitable for processing an electrical signal supplied by the antenna and encoding said piece of analogue or digital information, and/or for supplying an electrical signal encoding said piece of analogue or digital information to the antenna;
- electrically connecting the power supply and control module (23) to the electrically conductive element (9).

4. Production method according to claim 3, **characterised in that** the antenna is suitable for receiving and/or transmitting at least one radio, Wi-Fi, telephone, GPS or television signal.

5. Method for producing a vehicle structure, the method comprising the following steps:
- providing a first part (1) made of a thermoplastic material, having a first surface (3);
- providing a second part (5) made of a thermoplastic material, having a second surface (7);
- attaching the first and second surfaces (3, 7) to one another;
**characterised in that**:
- the attachment step comprises arranging an electrically conductive element (9) in the region of one of the first and second surfaces (3, 7), clamping the first and second surfaces (3, 7) against one another, generating heat by creating an electric current in the electrically conductive element (9), the electrically conductive element (9) being arranged so as to constitute an electromagnetic shield; and **in that**
- at least one of the first and second parts (1, 5) is an element of a roof (30) of the vehicle, the electrically conductive element (9) being part of a Faraday cage that surrounds a passenger compartment of the vehicle.

6. Production method according to any of the preceding claims, **characterised in that** the electrically conductive element (9) comprises at least one electrically conductive metal wire (11) and a sheath (13) encasing the wire (11), the sheath (13) being made of a thermoplastic material that is suitable for establishing a connection to the respective thermoplastic materials of the first and second parts (1, 5).

7. Production method according to any of the preceding claims, **characterised in that** the electrically conductive element (9) is arranged between the first and second surfaces (3, 7).

8. Production method according to any of claims 1 to 6, **characterised in that** the electrically conductive element (9) is embedded in one of the first and second parts (1, 5).

9. Production method according to any of the preceding claims, **characterised in that** the electric current is created in the electrically conductive element (9) by induction.

10. Vehicle structure, the structure comprising:
- a first part (1) made of a thermoplastic material, having a first surface (3);
- a second part (5) made of a thermoplastic material, having a second surface (7);
- the first and second surfaces (3, 7) being clamped against one another by fusion of the first and/or the second surface (3, 7);
**characterised in that** the structure comprises:
- an electrically conductive element (9) arranged in the region of one of the first and second surfaces (3, 7) and arranged so as to allow the first and/or second surface (3, 7) to melt when an electric current flows in the electrically conductive element (9);
- an electrical member (17) having a grounding circuit (19);
- a component (21) made of an electrically conductive metal;
- the electrically conductive element (9) being electrically connected both to the grounding circuit (19) and to the component (21) made of an electrically conductive metal; and **in that**
- the first and second parts (1, 5) are elements of the vehicle body or elements integrated in the vehicle chassis.

11. Vehicle structure, the structure comprising:
- a first part (1) made of a thermoplastic material, having a first surface (3),
- a second part (5) made of a thermoplastic material, having a second surface (7),
- the first and second surfaces (3, 7) being clamped against one another and attached to one another by fusion of the first and/or the second surface (3, 7),
**characterised in that** the structure comprises:
- an electrically conductive element (9) arranged in the region of one of the first and second surfaces (3, 7) and arranged so as to allow the first and/or second surface (3, 7) to melt when an electric current flows in the electrically conductive element (9), the electrically conductive element (9) also being arranged so as to constitute an antenna for receiving and/or transmitting an electromagnetic signal encoding a piece of analogue or digital information;
- a module (23) suitable for processing an electrical signal supplied by the antenna and encoding said piece of analogue or digital information, and/or for suppling an electrical signal encoding said piece of analogue or digital information to the antenna;
- the module (23) being electrically connected to the electrically conductive element (9).

12. Vehicle structure, the structure comprising:
- a first part (1) made of a thermoplastic material, having a first surface (3);
- a second part (5) made of a thermoplastic material, having a second surface (7);
- the first and second surfaces (3, 7) being clamped against one another and being attached to one another by fusion of the first and/or the second surface (3, 7);
**characterised in that** the structure comprises:
- an electrically conductive element (9) arranged in the region of one of the first and second surfaces (3, 7) and arranged so as to allow the first and/or second surface (3, 7) to melt when an electric current flows in the electrically conductive element (9), the electrically conductive element (9) also being arranged so as to constitute an electromagnetic shield, and **in that**
- at least one of the first and second parts (1, 5) is an element of a roof (30) of the vehicle, the electrically conductive element (9) being part of a Faraday cage that surrounds a passenger compartment of the vehicle.
